# EUROPÄISCHE PATENTSCHRIFT

(11) **EP 1 789 706 B1**
(45) Veröffentlichungstag und Bekanntmachung des Hinweises auf die Patenterteilung: **09.04.2008**
(21) Anmeldenummer: 05772194.6
(22) Anmeldetag: 06.07.2005
(51) Int. Cl.: F16H 61/44

(54) **HYDRAULISCHES GETRIEBE**
HYDRAULIC TRANSMISSION
BOITE DE VITESSES HYDRAULIQUE

(30) Priorität: 15.09.2004 DE 102004044510
(43) Veröffentlichungstag der Anmeldung: 30.05.2007
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2005/007271
(87) Internationale Veröffentlichungsnummer: WO 2006/029664

(56) Entgegenhaltungen:
- DE-U1-6202004 009 76
- DE-U1-7202004 009 76
- GB-A- 2 101 720
- US-A- 3 438 201
- US-A- 4 244 184
- PATENT ABSTRACTS OF JAPAN Bd. 018, Nr. 325 (M-1625), 21. Juni 1994 (1994-06-21) & JP 06 074206 A (HITACHI CONSTR MACH CO LTD), 15. März 1994 (1994-03-15)

## Beschreibung

Die Erfindung betrifft ein hydraulisches Getriebe nach der im Oberbegriff von Anspruch 1 näher definierten Art, wie aus der DE 202004009766 U bekannt.

Gattungsgemäße Getriebe bestehen aus mindestens zwei Hydraulikmotoren, welche über ein Summierungsgetriebe zusammengeschaltet sind und eine Abtriebswelle antreiben.

Die DE 39 07 633 C2 offenbart einen stufenlos regelbaren, hydrostatischen Fahrantrieb mit einem ersten und einem zweiten Hydraulikmotor, welche über ein Summierungsgetriebe zusammengeschaltet sind und eine Abtriebswelle antreiben, welche mit den Antriebsrädern des Mobil-Fahrzeugs in Verbindung steht. Um unterschiedliche Geschwindigkeitsbereiche fahren zu können, ist das Hubvolumen eines Hydraulikmotors veränderbar ausgeführt, und dieser Hydraulikmotor kann vollständig vom Kraftfluß mit der Abtriebswelle abgekoppelt werden.

Die EP 0 483 543 B1 offenbart einen hydrostatischen Antrieb mit zwei Hydraulikmotoren, welche über ein Summierungsgetriebe zusammengeschaltet sind und über mehrere schaltbare Untersetzungen eine Abtriebswelle antreiben. Um unterschiedliche Geschwindigkeitsbereiche fahren zu können, sind die Hubvolumina der Motore verstellbar ausgeführt und die Hydromotore können mit unterschiedlichen Untersetzungsstufen verbunden werden.

Der vorliegenden Erfindung liegt die Aufgabe zugrunde, ein hydraulisches Getriebe zu schaffen, welches aus mindestens zwei Hydromotoren besteht, welche über ein Summierungsgetriebe zusammengeschaltet sind und eine Abtriebswelle antreiben, wobei mindestens ein Hydromotor in seinem Hubvolumen verstellbar und die Ansteuerung des hydraulischen Getriebes einfach und kostengünstig ausgeführt ist.

Die Aufgabe wird durch ein, auch die kennzeichnenden Merkmale des Hauptanspruchs aufweisendes, gattungsgemäßes, hydraulisches Getriebe gelöst.

Erfindungsgemäß wird ein hydraulischer Motor über ein elektrisch betätigbares Ventil hydraulisch von der Druckmittelquelle getrennt, wodurch der Druckmittelzulauf und der Druckmittelrücklauf dieses hydraulischen Motors mit einem Druckmittelreservoir in Verbindung steht. Indem dieses Ventil nur dann geschaltet wird, wenn der hydraulische Motor nahe seinem Hubvolumen Null betrieben wird, ist es möglich, ein elektrisch schaltbares Ventil zu verwenden, da in diesem Betriebszustand kein großer Druckmittelstrom durch das Ventil zu- oder abgeschaltet werden muß. Die Abschalteinrichtung benötigt somit kleine Schaltkräfte und kann deshalb über ein elektrisch betätigtes Ventil direkt angesteuert werden. Vorzugsweise ist das elektrisch betätigbare Ventil über mindestens einen Schaltmagneten betätigbar.

In einer weiteren Ausgestaltungsform der Erfindung ist das elektrisch betätigbare Ventil im bestromten Zustand über eine Feder so geschaltet, dass der Hydromotor mit der Druckmittelquelle verbunden ist. Durch Stromlosschalten des elektrisch betätigbaren Ventils kann dann der Hydraulikmotor von der hydraulischen Pumpe abgetrennt werden.

In einer weiteren Ausgestaltungsform der Erfindung wird auch die hydraulische Verstellung des Hubvolumens des Hydraulikmotors vereinfacht, indem die Hubvolumen-Verstelleinrichtung des hydraulischen Motors aus einem elektrisch betätigbaren Ventil besteht, welches eine Zylinder-KolbenEinheit ansteuert, welche das Hubvolumen des Hydraulikmotors verstellt. Weil der Hochdruck vor und nach dem Ventil keine Rückwirkung auf den Ventilkolben hat, genügt eine kleine Betätigungskraft. Durch die Verwendung von elektrisch betätigbaren Ventilen, die direkt auf den Ventilschieber wirken, wird die Steuerung vereinfacht und die Genauigkeit der Verstellung erhöht, da die toleranzbehafteten Elemente, wie beispielsweise Vorsteuerventile, in Verbindung mit hydraulischen Ventilen entfallen.

In einer Ausgestaltungsform der Erfindung bestehen die hydraulischen Motore aus Radialkolbenmotoren, bei welchen vorzugsweise die Verstellzylinder zum Verstellen des Hubvolumens in der Kurbelwelle angeordnet sind. Dadurch sind die Verstellzylinder, und damit die Verstellvolumenströme, klein. Der vom Hydraulikmotor erzeugte Hochdruck auf das Verstellventil hat keine Rückwirkung und somit sind die Betätigungskräfte klein. Dadurch ist es möglich, auf eine Vorsteuerung dieses Ventils zu verzichten und dieses Ventil elektrisch betätigbar auszuführen. In einer weiteren Ausgestaltungsform der Erfindung werden die Ventilkolben dieses elektrisch betätigbaren Ventils zur Hubvolumen-Ver-stellung des Motors direkt über Proportionalmagnete gesteuert.

Weitere Merkmale sind der Figuren-Beschreibung zu entnehmen. Es zeigen:
- Fig. 1: ein hydraulisches Getriebe mit einem nicht schaltbaren Summierungsgetirebe und

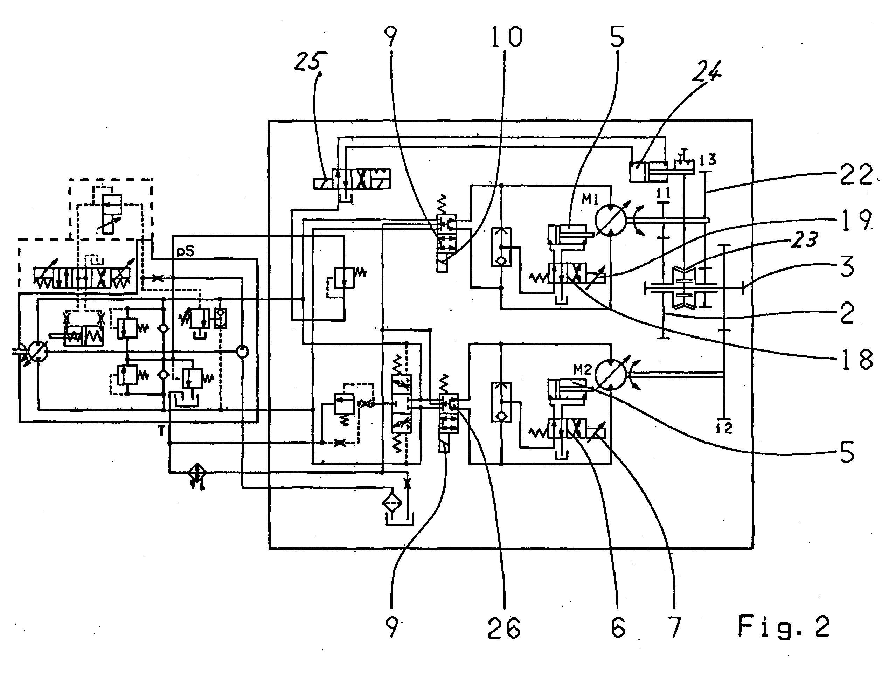

- Fig. 2: ein hydraulisches Getriebe mit einem schaltbaren Summierungsgetriebe.

### Fig. 1:

Ein erster Hydromotor 1 ist in seinem Hubvolumen verstellbar ausgeführt und treibt über eine erste Untersetzungsstufe 2 die Abtriebswelle 3 an. Ein zweiter Hydromotor 4, welcher in seinem Hubvolumen verstellbar ausgeführt ist, treibt über eine zweite Untersetzungsstufe 5 die Abtriebswelle 3 an. Eine verstellbare hydraulische Pumpe 6 weist, je nach Drehrichtung, eine Förderleitung 7 und eine Saugleitung 8 auf. Ein elektrisch betätigbares Ventil 9 verbindet im bestromten Zustand durch den Schaltmagnet 10 die Förderleitung 7 mit dem Druckmittelzufluß 11 und die Saugleitung 8 mit dem Druckmittelrückfluß 12. Wird der Schaltmagnet 10 nicht bestromt, schiebt die Feder 13 das Ventil in die andere Schaltstellung, in welcher der Druckmittelzufluß 11 und der Druckmittelrückfluß 12 mit dem Druckmittelreservoir 14 verbunden sind, wobei vorzugsweise zwischen dem Druckmittelreservoir 14 und dem Druckmittelzufluß 11 und Druckmittelrückfluß 12 eine Drossel 15 angeordnet ist, um einen Mindestdruck aufrechtzuerhalten. Vorzugsweise wird das elektrisch betätigbare Ventil 9 nur dann betätigt, wenn der erste Hydromotor 1 ein Schlupfvolumen aufweist, welches nahezu Null ist. Dadurch wird gewährleistet, dass nahezu kein Druckmittelstlrom über das Ventil 9 fließt, wodurch beim Betätigen des Ventils 9 kein großer Druckmittelstrom freigegeben oder abgeschnitten werden muß. Die Betätigung des Ventils 9 ist somit elektrisch möglich.

Der erste Hydromotor 1 und der zweite Hydromotor 4 sind in ihrem Hubvolumen verstellbar ausgeführt, indem die Hubvolumen-Verstelleinrichtungen 16 und 17 das Hubvolumen der Motore verstellen. Die Hubvolumen-Verstelleinrichtungen 16 und 17 sind prinzipiell gleich aufgebaut, weshalb nur eine Hubvolumen-Verstelleinrichtung beschrieben ist. Das elektrisch verstellbare Ventil 18 weist vorzugsweise Proportionalventile 19 auf, wodurch der Verstellzylinder 20, entsprechend einem angelegten Strom am Proportionalventil 19, verstellt werden kann. Bei Verwendung von Radial-Hydromotoren besteht die Möglichkeit, den Verstellzylinder 20 in der Kurbelwelle anzuordnen, wodurch der Durchmesser gering gehalten werden kann und keinerlei Rückstellkräfte aus dem Hochdruck des Hydromotors auf das elektrisch betätigbare Ventil 17 einwirken kann. Somit besteht die Möglichkeit, das elektrisch betätigte Ventil 17 elektrisch betätigbar auszuführen. Über ein Ventil 21 erhält das elektrisch betätigbare Ventil 17 immer den Hochdruck der hydraulischen Pumpe 6, um den Verstellzylinder 20 damit anzusteuern. Durch Verwendung der elektrisch betätigbaren Ventile 17 und 9 kann die hydraulische Steuerung einfach und kostengünstig aufgebaut werden, und die Genauigkeit der hydraulischen Steuerung wird erhöht, indem Toleranzen aus Vorsteuerventilen nicht negativ wirken können.

Wird das hydraulische Getriebe bei niedriger Drehzahl und hohem Drehmoment betrieben, so befindet sich das elektrisch betätigbare Ventil 9 in bestromtem Zustand, wodurch die Förderleitung 7 mit dem Druckmittelzufluß 11 und die Saugleitung 8 mit dem Druckmittelrückfluß 12 verbunden ist und durch Ausschwenken des ersten Hydromotors 1 und des zweiten Hydromotors 4 ein hohes Drehmoment und eine geringe Drehzahl erreicht wird. Bei Erreichen der maximal zulässigen Drehzahl des ersten Hydromotors 1 bei Druckbeaufschlagung wird der erste Hydromotor 1 auf ein Schluckvolumen nahezu Null verstellt und anschließend das elektrisch betätigte Ventil 9 stromlos geschaltet, wodurch die Feder 13 das Ventil umschaltet, und der erste Hydromotor 1 nur noch mit einem sehr geringen Druck beaufschlagt wird. Bei diesem geringen Druck kann der erste Hydromotor 1 auch bei höheren Drehzahlen betrieben werden. Das hydraulische Getriebe bw. dessen Abtriebswelle 3 kann somit oberhalb einer zulässigen Drehzahl des ersten Hydromotors 1 bei Druckbeaufschlagung betrieben werden.

### Fig. 2:

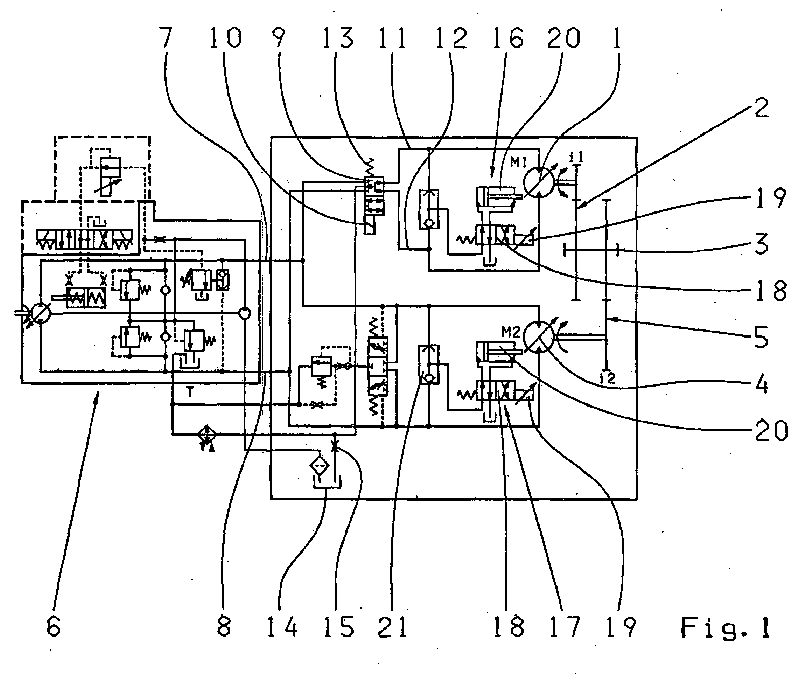

Bauteile mit denselben Bezugszeichen wie die Bauteile in Fig. 1, erfüllen dieselben Funktionen, weshalb auf die Beschreibung von Fig. 1 verwiesen wird. Der erste Hydromotor 1 ist mit einer ersten Untersetzungsstufe 2 und einer dritten Untersetzungsstufe 22 mit der Abtriebswelle 3 verbindbar ausgeführt. Eine mechanische Schaltvorrichtung 23, beispielsweise eine Synchronisierung, wird über den Zylinder 24 betätigt, wodurch der erste Hydromotor 1 entweder über die erste Untersetzungsstufe 2 oder die dritte Untersetzungsstufe 22 mit der Abtriebswelle 3 verbindbar ist. Der Zylinder 24 wird über das elektrisch betätigbare Ventil 25 angesteuert. Um das maximale Drehmoment im Anfahrgang zu erreichen, werden die Hubvolumen-Verstelleinrichtungen 16 und 17 so verstellt, dass der erste Motor 1 und der zweite Motor 4 auf ihrem maximalen Hubvolumen sind. Die Schalteinrichtung 23 wird so geschaltet, dass die Schalteinrichtung 23 den ersten Hydromotor 1 über die erste Untersetzungsstufe 2 mit der Abtriebswelle 3 verbindet. Um die maximale Enddrehzahl der Abtriebswelle 3 zu erreichen, wird der zweite Hydromotor 4 über das elektrische Betätigungsventil 26 von der hydraulischen Pumpe 6 bzw. deren Förderleitung 7 und Saugleitung 8 abgekoppelt und der erste Hydromotor 1 über das elektrische Betätigungsventil 9 mit der Förderleitung 7 und Saugleitung 8 der Pumpe verbunden und auf ein kleines Hubvolumen mit Hilfe des elektrischen Ventils 18 verstellt. Somit wird der zweite Hydromotor 4 oberhalb seiner zulässigen Drehzahl bei Druckbeaufschlagung betrieben, wodurch die Abtriebswelle 3 ihre maximale Drehzahl erreicht. Drehzahlen der Abtriebswelle 3 zwischen der maximalen Drehzahl und der Anfahrdrehzahl werden erreicht, indem der erste Hydromotor 1 über die erste Untersetzungsstufe 2 oder die dritte Untersetzungsstufe 22 mit der Abtriebswelle 3 verbunden ist, und der erste Hydromotor 1 über das elektrische Betätigungsventil 9 und der zweite Hydromotor 4 über das elektrische Betätigungsventil 26 zu- oder abgeschaltet sind. Die Betätigung der elektrischen Ventile 9 und 26 wird bei nahezu Hubvolumen Null des betreffenden Hydromotors 1 oder 4 vollzogen. Dadurch ist gewährleistet, dass beim Schalten der elektrischen Ventile 9 bzw. 26 kein bzw. nur ein geringer Druckmittelstrom vorhanden ist.

### Bezugszeichen

- 1: erster Hydromotor
- 2: erste Untersetzungsstufe
- 3: Abtriebswelle
- 4: zweiter Hydromotor
- 5: zweite Untersetzungsstufe
- 6: hydraulische Pumpe
- 7: Förderleitung
- 8: Saugleitung
- 9: elektrisch betätigbares Ventil
- 10: Schaltmagnet
- 11: Druckmittellzufluß
- 12: Druckmittelrückfluß
- 13: Feder
- 14: Druckmittelreservoir
- 15: Drossel
- 16: Hubvolumen-Verstelleinrichtung
- 17: Hubvolumen-Verstelleinrichtung
- 18: elektrisch verstellbares Ventil
- 19: Proportionalventil
- 20: Verstellzylinder
- 21: Ventil
- 22: dritte Untersetzungsstufe
- 23: Schalteinrichtung
- 24: Zylinder
- 25: elektrisch betätigbares Ventil
- 26: elektrisch betätigbares Ventil

## Patentansprüche

1. Hydraulisches Getriebe, bei welchem ein erster, in seinem Hubvolumen verstellbarer Radialkolbenhydraulikmotor (1) und ein zweiter, in seinem Hubvolumen verstellbarer Hydraulikmotor (4) mit einer Abtriebswelle (3) in Wirkverbindung bringbar ist, wobei der erste Hydraulikmotor (1) einen Druckmittelzulauf (11) und einen Druckmittelrücklauf (12) aufweist, welcher mit einer Förderleitung (7) und einer Saugleitung (8) einer hydraulischen Pumpe (6) verbindbar ist, wobei ein Ventil (9) in einer ersten Schaltstellung die Förderleitung (7) mit dem Druckmittelzulauf (11) und die Saugleitung (8) mit dem Druckmittelrücklauf (12) verbindet, und in einer zweiten Schaltstellung den Druckmittelzulauf (11) und den Druckmittelrücklauf (12) mit einem Druckmittelreservoir (14) verbindet, **dadurch gekennzeichnet, dass** das Ventil (9) als elektrisch betätigbares Ventil (9) ausgeführt ist und ein Umschalten von der ersten in die zweite Schaltstellung und von der zweiten in die erste Schaltstellung nur dann stattfindet, wenn der erste Hydraulikmotor (1) auf nahezu keinem Hubvolumen verstellt ist.

2. Hydraulisches Getriebe nach Anspruch 1, **dadurch gekennzeichnet, dass** das elektrisch betätigbare Ventil (9) über mindestens einen Schaltmagnet (10) betätigbar ist.

3. Hydraulisches Getriebe nach Anspruch 1, **dadurch gekennzeichnet, dass** das elektrisch betätigbare Ventil (9) in stromlosem Zustand über eine Rückstellfeder in die zweite Schaltstellung geschaltet wird.

4. Hydraulisches Getriebe nach Anspruch 1, **dadurch gekennzeichnet, dass** der erste (1) und der zweite (4) Hydraulikmotor immer mit der Abtriebswelle (3) in Verbindung steht.

## Claims

1. Hydraulic gear, wherein a first radial piston hydraulic motor (1) which can be adjusted in terms of the displacement volume thereof and a second hydraulic motor (4) which can be adjusted in terms of the displacement volume thereof can be brought into operational connection with an output shaft (3), the first hydraulic motor (1) having a pressure medium supply (11) and a pressure medium return (12), which can be connected to a supply line (7) and an intake line (8) of a hydraulic pump (6), a valve (9) connecting the supply line (7) to the pressure medium supply (11) and the intake line (8) to the pressure medium return (12) in a first switching position and connecting the pressure medium supply (11) and the pressure medium return (12) to a pressure medium reservoir (14) in a second switching position, **characterised in that** the valve (9) is constructed as an electrically operable valve (9) and switching from the first to the second switching position and from the second to the first switching position is carried out only when the first hydraulic motor (1) is adjusted so as to have almost no displacement volume.

2. Hydraulic gear according to claim 1, **characterised in that** the electrically operable valve (9) can be activated by means of at least one switching magnet (10).

3. Hydraulic gear according to claim 1, **characterised in that** the electrically operable valve (9), when not supplied with electrical power, is switched into the second switching position by means of a return spring.

4. Hydraulic gear according to claim 1, **characterised in that** the first hydraulic motor (1) and the second hydraulic motor (4) are always connected to the output shaft (3).

## Revendications

1. Mécanisme hydraulique dans laquelle un premier moteur hydraulique à pistons radiaux (1) réglable en cylindrée et un second moteur hydraulique (4) réglable en cylindrée peuvent être mis en liaison active avec un arbre de sortie (3), le premier moteur hydraulique (1) comportant une arrivée de milieu de pression (11) et un retour de milieu de pression (12), qui peuvent être reliés à une conduite de refoulement (7) et à une conduite d'aspiration (8) d'une pompe hydraulique (6), une soupape (9) reliant, dans une première position de commutation, la conduite de refoulement (7) à l'arrivée de milieu de pression (11) et la conduite d'aspiration (8) au retour de milieu de pression (12) tandis que, dans une seconde position de commutation, elle relie l'arrivée de milieu de pression (11) et le retour de milieu de pression (12) à un réservoir de milieu de pression (14), **caractérisé en ce que** la soupape (9) est constituée par une soupape à actionnement électrique (9) et une inversion passant de la première position de commutation à la seconde position de commutation et de la seconde position de commutation à la première ne se produit que lorsque le premier moteur hydraulique (1) est réglé sur une cylindrée presque nulle.

2. Mécanisme hydraulique selon la revendication 1, **caractérisé en ce que** la soupape à actionnement électrique (9) peut être actionnée par l'intermédiaire d'au moins un électro-aimant de commutation (10).

3. Mécanisme hydraulique selon la revendication 1, **caractérisé en ce que** la soupape à actionnement électrique (9) est inversée sur la seconde position de commutation au moyen d'un ressort de rappel dans l'état sans courant.

4. Mécanisme hydraulique selon la revendication 1, **caractérisé en ce que** le premier moteur hydraulique (1) et le second moteur hydraulique (4) sont toujours en liaison avec l'arbre de sortie (3).
